(19) **Europäisches Patentamt / European Patent Office / Office européen des brevets**

(11) **EP 4 699 726 A1**

(12) **EUROPEAN PATENT APPLICATION**

(43) Date of publication:
**25.02.2026 Bulletin 2026/09**

(21) Application number: **25197590.0**

(22) Date of filing: **22.08.2025**

(51) International Patent Classification (IPC):
**B23F 13/02** (2006.01)   **B23C 3/32** (2006.01)

(52) Cooperative Patent Classification (CPC):
**B23F 13/02; B23C 3/32**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **07.08.2024 JP 2024130596**

(71) Applicant: **AISIN CORPORATION**
**Aichi 448-8650 (JP)**

(72) Inventors:
• **HASHIMOTO, Kohei**
**Kariya, Aichi, 448-8650 (JP)**
• **SHIMMI, Kensuke**
**Kariya, Aichi, 448-8650 (JP)**
• **TACHIKAWA, Tomokazu**
**Kariya, Aichi, 448-8650 (JP)**

(74) Representative: **TBK**
**Bavariaring 4-6**
**80336 München (DE)**

Remarks:
A request for re-establishment of rights in respect of the twelve-month period from the date of filing of the first application has been granted (Art.87(1) and Art.122 EPC).

(54) **MANUFACTURING METHOD OF GEAR**

(57)    A manufacturing method of a gear (30) includes: rotating a rod-shaped workpiece around a first axis (A1); rotating a tool having a cutting edge (201) on an outer peripheral side around a second axis at a twisted position with respect to the first axis; and while relatively moving the workpiece and the tool in a direction parallel to the first axis at a speed synchronized with a rotation speed of the workpiece, forming a spiral tooth groove (301) on an outer peripheral surface of the workpiece by bringing the cutting edge of the tool into contact with the outer peripheral surface of the workpiece and removing a material of the workpiece at a contact position by the relative movement between the tool and the workpiece. In a plane perpendicular to the first axis, the workpiece is rotated around the first axis and the workpiece and the tool are relatively moved in the direction parallel to the first axis at the speed synchronized with the rotation speed of the workpiece such that a contour line ($O_E$) of the cutting edge of the tool is in rolling contact with a target contour line ($O_G$), which is a contour line of the spiral tooth groove to be formed, at a predetermined point (R) of the target contour line or an extension line of the target contour line without slipping, and rotates while sliding with respect to the target contour line or the extension line at a point other than the predetermined point. In the plane perpendicular to the first axis, a diameter ($D_F$) of a first circle, which is a circle centered on the first axis and passing through the predetermined point, is 1 time or more and 1.5 times or less a diameter ($D_T$) of a second circle which is a tooth tip circle ($C_T$) of the gear manufactured from the workpiece centered on the first axis.

FIG.3

**Description**

TECHNICAL FIELD

This disclosure relates to a manufacturing method of a gear.

BACKGROUND DISCUSSION

In the related art, as disclosed in WO 2011/078365A (Reference 1), whirling machining is known as a manufacturing method of a gear or a screw. The whirling machining is a machining method for forming a spiral groove such as a tooth groove or a thread groove on an outer periphery of a rod-shaped workpiece by cutting the outer periphery of the workpiece with an inner periphery of an annular whirling cutter.

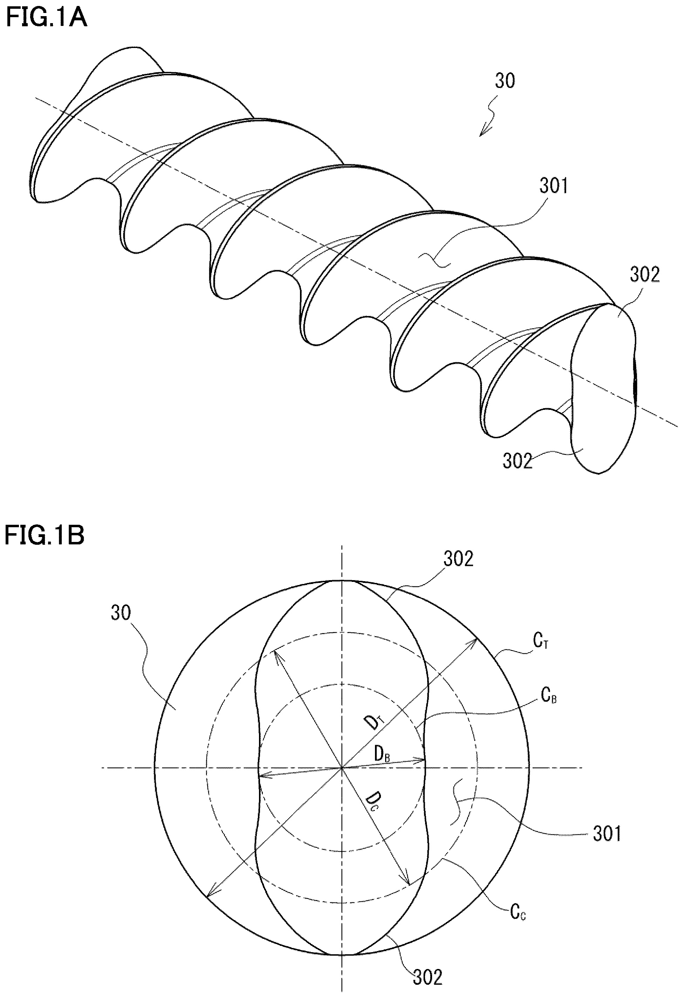

However, in the whirling machining, a portion where a tooth groove or a thread groove is not formed is generated at both end portions of the workpiece, and a portion where a shape of the tooth groove or the thread groove to be formed is incomplete (hereinafter, sometimes referred to as an incomplete machined portion) is generated. Specifically, since an axis of the whirling cutter is not parallel to an axis of the workpiece but is inclined (see Fig. 1 of Reference 1), when the whirling cutter is brought close to a chuck or a center (tailstock), an outer peripheral portion of the whirling cutter interferes with the chuck or the center. Therefore, since a machining point (a point where the whirling cutter is in contact with the workpiece) cannot be brought close to the chuck or the center, machining cannot be performed on the both end portions of the workpiece (more specifically, a portion near a portion gripped by the chuck and a portion near a portion supported by the center). Therefore, these portions of the workpiece cannot be machined, and the incomplete machined portion as described above is generated.

An inclination angle of the axis of the whirling cutter with respect to the axis of the workpiece is affected by a lead angle of a groove (tooth groove or thread groove) formed in the workpiece. Since the inclination angle increases as the lead angle increases, a length of the incomplete machined portion increases. Therefore, as the lead angle of the manufactured gear or screw increases, the incomplete machined portion becomes longer, and as a result, waste of the workpiece increases.

A need thus exists for a gear manufacturing method for manufacturing a gear by forming a spiral tooth groove (or forming a protruding tooth) in a workpiece such that a length of an incomplete machined portion generated at both ends of a rod-shaped workpiece is shortened.

SUMMARY

A manufacturing method of a gear according to the disclosure includes: rotating a rod-shaped workpiece around a first axis; rotating a tool having a cutting edge on an outer peripheral side around a second axis at a twisted position with respect to the first axis; and while relatively moving the workpiece and the tool in a direction parallel to the first axis at a speed synchronized with a rotation speed of the workpiece, forming a spiral tooth groove on an outer peripheral surface of the workpiece by bringing the cutting edge of the tool into contact with the outer peripheral surface of the workpiece and removing a material of the workpiece at a contact position by the relative movement between the tool and the workpiece. In a plane perpendicular to the first axis, the workpiece is rotated around the first axis and the workpiece and the tool are relatively moved in the direction parallel to the first axis at the speed synchronized with the rotation speed of the workpiece such that a contour line of the cutting edge of the tool is in rolling contact with a target contour line, which is a contour line of the spiral tooth groove to be formed, at a predetermined point of the target contour line or an extension line of the target contour line without slipping, and rotates while sliding with respect to the target contour line or the extension line at a point other than the predetermined point. In the plane perpendicular to the first axis, a diameter of a first circle, which is a circle centered on the first axis and passing through the predetermined point, is 1 time or more and 1.5 times or less a diameter of a second circle which is a tooth tip circle of the gear manufactured from a contour line of the workpiece centered on the first axis.

According to the disclosure, the angle (axis inclination angle) formed by the first axis and the second axis projected onto a plane including the first axis and parallel to the second axis can be reduced. Therefore, when the tool is moved in the direction parallel to the first axis, interference between a member holding an end portion of the workpiece and an outer peripheral portion of the tool can be prevented or reduced. Therefore, since a distance between the tool and the member holding the end portion of the workpiece can be reduced during manufacturing of the gear, a portion where the tooth groove is not formed and an incomplete machined portion can be shortened.

BRIEF DESCRIPTION OF THE DRAWINGS

The foregoing and additional features and characteristics of this disclosure will become more apparent from the following detailed description considered with the reference to the accompanying drawings, wherein:

Fig. 1A is a perspective view showing an example of a manufactured gear;

Fig. 1B is a cross-sectional view showing the example of the manufactured gear;

Fig. 2A is a perspective view showing a configuration example of a gear manufacturing device;

Fig. 2B is a top view showing the configuration example of the gear manufacturing device;

Fig. 3 is a view showing a movement trajectory of a cutting edge with respect to a workpiece;

Fig. 4 is a side view showing an example of the manufactured gear;

Fig. 5A is a schematic view showing a shape of a cutting edge of a tool in the related art; and

Fig. 5B is a schematic view showing a shape of a cutting edge of a tool according to the embodiment.

DETAILED DESCRIPTION

Hereinafter, an embodiment disclosed here will be described in detail with reference to the drawings. Hereinafter, a manufacturing method of a gear may be simply referred to as a manufacturing method. In the embodiment, as a manufacturing method, a method of manufacturing a gear 30 using a rod-shaped workpiece W made of metal as a starting material will be described. In the embodiment, an example in which the workpiece W is a round rod-shaped (or also referred to as a columnar shape) member is shown, but the workpiece W is not limited to the round rod shape as long as the workpiece W has a rod shape. The workpiece W may be a solid rod-shaped member or a hollow rod-shaped member. However, the workpiece W is preferably a columnar or cylindrical member having an outer diameter equal to a tooth tip circle of the manufactured gear.

Figs. 1A and 1B are views showing an example of the gear 30 manufactured by the manufacturing method according to the embodiment. Fig. 1A is a perspective view of the gear 30, and Fig. 1B is a cross-sectional view of the gear 30 taken along a plane perpendicular to an axial direction. The gear 30 manufactured by the manufacturing method according to the embodiment is a helical gear having a module of 0.3 or more and 2.0 or less, the number of teeth 302 (hereinafter referred to as the number of teeth) of 1 to 4, and a twist angle of 30° or more and 60° or less. Figs. 1A and 1B show a helical gear having the number of teeth of 2 and a twist angle of 45°. In Fig. 1B, a circle $C_B$ indicates a tooth bottom circle, a circle $C_C$ indicates a tooth height center circle, and a circle $C_T$ indicates a tooth tip circle. The tooth tip circle $C_T$ is an example of a second circle of the disclosure. In the embodiment, an outer peripheral surface (contour line as viewed in the axial direction) of the workpiece W becomes a tooth tip (tooth tip circle $C_T$) of the manufactured gear 30. That is, the outer diameter of the workpiece W and a diameter of the tooth tip circle $C_T$ are the same.

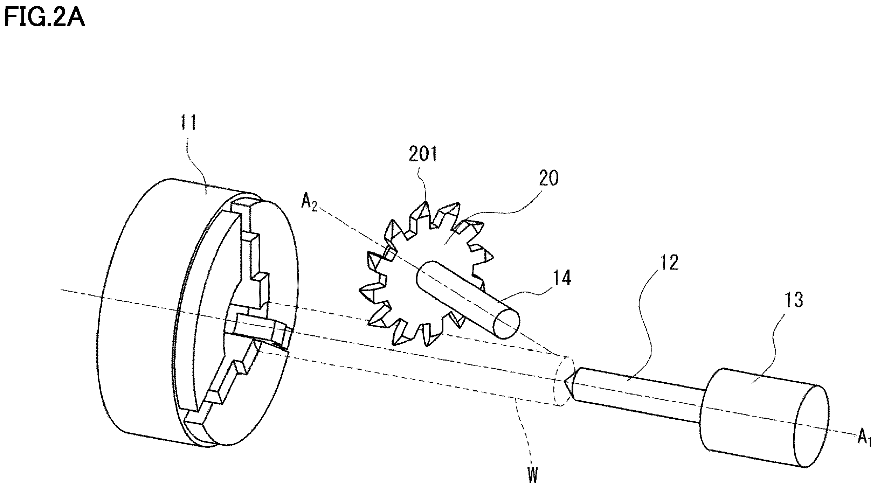

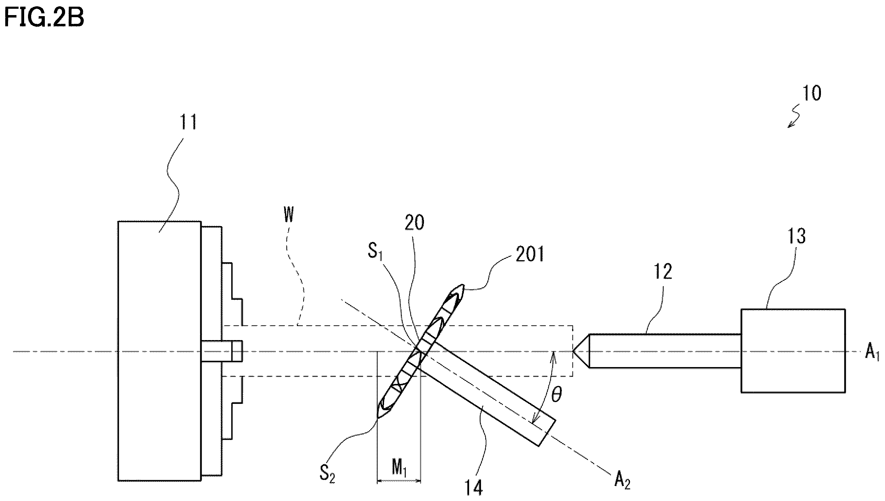

Figs. 2A and 2B are schematic views showing a configuration example of a main part of a device 10 capable of performing the manufacturing method according to the embodiment. Fig. 2A is a perspective view of the main part of the device 10, and Fig. 2B is a top view of the main part of the device 10. A gear cutting machine such as a gear milling capable of manufacturing the gear 30 using a single cutter as a tool 20 can be applied to the device 10. The single cutter, which is the tool 20, is a tool having a substantially disk shape and provided with a plurality of cutting edges 201 arranged on an outer peripheral portion in a circumferential direction. A shape of the cutting edge 201 of the tool 20 will be described later. As shown in Fig. 2A, the device 10 includes a chuck 11, a center 12, a tailstock 13, and a tool holder 14 that holds the tool 20. The chuck 11 can support (grip) one end portion of the workpiece W, which is a columnar member or a cylindrical member, in the axial direction. The center 12 and the tailstock 13 can support an end portion of the workpiece W opposite to the one end portion in the axial direction. The tool holder 14 can hold the tool 20.

The device 10 further includes a rotational power source (not shown). The device 10 rotates each of the chuck 11 and the tool holder 14 by the rotational power source. A rotation center line $A_1$ of the chuck 11 (also referred to as a rotation center line (axis) of the workpiece W supported by the chuck 11) is referred to as a first axis $A_1$, and a rotation center line $A_2$ of the tool holder 14 (also referred to as a rotation center line of the tool 20) is referred to as a second axis $A_2$. The first axis $A_1$ and the second axis $A_2$ are in a twisted position. That is, the first axis $A_1$ and the second axis $A_2$ are not parallel and do not intersect. Therefore, when the second axis $A_2$ is projected onto a "plane including the first axis $A_1$ and parallel to the second axis $A_2$" in a direction perpendicular to the plane, the first axis $A_1$ and the projected second axis $A_2$ extend in different directions. That is, as shown in Fig. 2B, in this plane, the first axis $A_1$ and the projected second axis $A_2$ are inclined to each other at a predetermined angle θ other than 0(°). The predetermined angle θ (smaller angle among the angles formed by the first axis $A_1$ and the second axis $A_2$) is referred to as an axis inclination angle θ. This plane may be referred to as a projection plane.

The device 10 can relatively move the workpiece W and the tool holder 14 in a direction parallel to the first axis $A_1$ at a speed synchronized with a rotation speed of the chuck 11 (that is, a rotation speed of the workpiece W) in a state where the workpiece W is gripped by the chuck 11. In the device 10, the chuck 11, the center 12, and the tailstock 13 may be linearly movable in the direction parallel to the first axis $A_1$, the tool holder 14 may be linearly movable in the direction parallel to the first axis $A_1$, or both the chuck 11, the center 12, and the tailstock 13, and the tool holder 14 may be linearly movable in the direction parallel to the first axis $A_1$.

The device 10 can cut the outer peripheral surface of the workpiece W by the cutting edge 201 of the tool 20 (the outer peripheral portion of the tool 20) held by the tool holder 14 in the state where the workpiece W is gripped by the chuck 11. Since the first axis $A_1$ and the projected second axis $A_2$ are in a twisted relationship, a tooth groove 301 inclined at an angle corresponding to a magnitude of the axis inclination angle $\theta$ with respect to a direction perpendicular to the axis (that is, the first axis $A_1$) of the workpiece W is formed on the outer peripheral surface of the workpiece W.

Here, an operation of the device 10 when manufacturing the gear 30 will be described. In a state where the workpiece W is supported by the chuck 11 and the tailstock 13, the workpiece W is rotated around the first axis $A_1$. As shown in Fig. 2B, a position of the tool 20 is adjusted such that a center position of the tool 20 on the projection plane is positioned on the first axis $A_1$. Thereafter, in a state where the tool 20 is attached to the tool holder 14, the tool holder 14 is rotated around the second axis $A_2$. The workpiece W and the tool holder 14 (tool 20) are relatively moved in the direction parallel to the first axis $A_1$ at a speed synchronized with the rotation speed of the workpiece W. A specific relative speed between the workpiece W and the tool holder 14 is a speed at which the workpiece W and the tool holder 14 relatively move by a distance of "(the number of teeth of the manufactured gear 30) × (an interval between adjacent teeth 302 in a direction of the first axis $A_1$ (or an interval between the tooth grooves 301))" every time the workpiece W rotates once.

By bringing the cutting edge 201 of the rotating tool 20 (the outer peripheral portion of the tool 20) into contact with the outer peripheral surface of the workpiece W, a material of the workpiece W at the contact portion is removed. Accordingly, the tooth groove 301 extending in a direction inclined at an angle corresponding to the axis inclination angle $\theta$ with respect to the first axis $A_1$ is formed on the outer peripheral surface of the workpiece W. The workpiece W and the tool holder 14 relatively move in the direction parallel to the first axis $A_1$ at a speed synchronized with the rotation speed of the workpiece W, whereby the spiral tooth groove 301 is formed on the outer peripheral surface of the workpiece W, and as a result, the spiral tooth 302 (spiral protrusion) is formed on the outer peripheral surface of the workpiece W. Accordingly, the helical gear is manufactured.

The tool 20 attached to the tool holder 14 and the chuck 11 can move relative to each other in the direction parallel to the first axis $A_1$ within a range in which the tool 20 and the chuck 11 do not come into contact with each other. As shown in Fig. 2B, since the projected second axis $A_2$ is inclined at the axis inclination angle $\theta$ with respect to the first axis $A_1$ in the projection plane, for example, even when the tool holder 14 is brought closest to the chuck 11 within a range in which an outer peripheral portion $S_2$ of the tool 20 does not come into contact with the chuck 11, a position $S_1$ at which the cutting edge 201 of the tool 20 actually cuts the workpiece W is positioned at a distance $M_1$ from the chuck 11. That is, the tooth groove 301 cannot be formed in a range of the distance $M_1$ from the position $S_1$ of the workpiece W with which the cutting edge 201 of the tool 20 comes into contact.

As is clear from Fig. 2B, the distance $M_1$ increases as the axis inclination angle $\theta$ increases. Therefore, as the axis inclination angle $\theta$ increases, a portion where the tooth groove 301 cannot be formed in the workpiece W becomes longer. As the axis inclination angle $\theta$ increases, an incomplete machined portion (a portion of the tooth 302 where a target contour line $O_G$ cannot be obtained, that is, a portion where the tooth 302 does not have a design shape), which is a portion where a shape of the tooth 302 at an end portion of a range where the tooth groove 301 is formed is incomplete, becomes longer. In particular, when a helical gear having a twist angle of 30° or more and 60° or less is manufactured as in the embodiment, the axis inclination angle $\theta$ needs to be increased as compared with a case where a general male screw for fastening is manufactured, and thus the above-described problem is likely to occur. Therefore, in the embodiment, the axis inclination angle $\theta$ is made small by the following configuration.

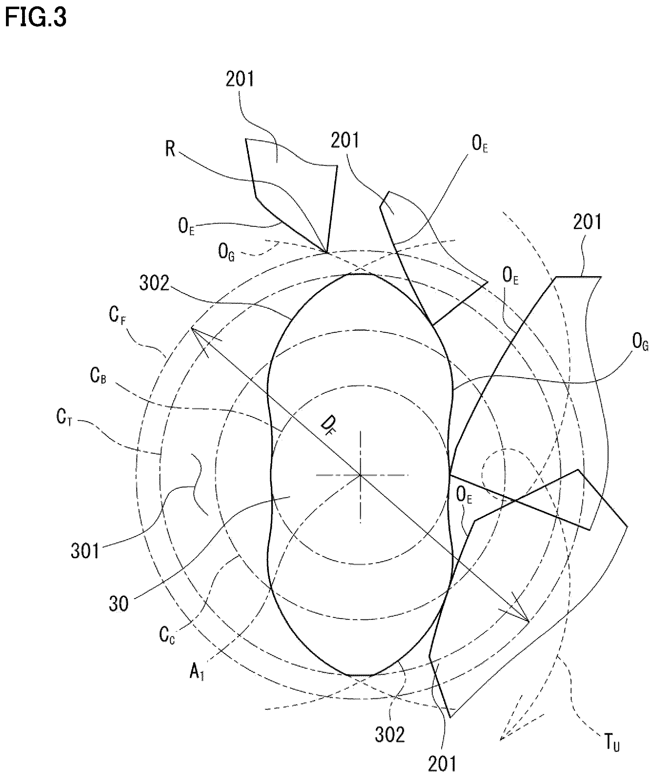

Fig. 3 is a schematic view showing a movement trajectory $T_U$ of a contour line $O_E$ of the cutting edge 201 (that is, the movement trajectory $T_U$ of the contour line $O_E$ of the cutting edge 201 of the tool 20 with respect to the workpiece W) in a cross section perpendicular to the first axis $A_1$ when it is assumed that the workpiece W is fixed. When it is assumed that the workpiece W is fixed, the contour line $O_E$ of the cutting edge 201 of the tool 20 moves in the cross section while rotating around a straight line (a straight line perpendicular to a paper surface in Fig. 3) parallel to the first axis $A_1$ with respect to the workpiece W while being in contact with the target contour line $O_G$ of the tooth 302 of the gear 30 (referred to as a design contour line of the tooth 302 of the manufactured gear 30) or an extension line thereof. When the target contour line $O_G$ is an involute curve, the extension line thereof is also an involute curve. Hereinafter, the term "target contour line $O_G$" includes the target contour line and the extension line thereof. The movement trajectory $T_U$ of the cutting edge 201 in this cross section is a hypocycloid curve.

When the contour line $O_E$ of the cutting edge 201 of the tool 20 moves in this cross section, the contour line $O_E$ of the cutting edge 201 has a point R that comes into rolling contact with the target contour line $O_G$ of the tooth 302 without slipping. In other words, the contour line $O_E$ of the cutting edge 201 comes into rolling contact with the target contour line $O_G$ without slipping at the predetermined point R of the target contour line $O_G$ while coming into contact with the target contour line $O_G$, and rotates while sliding with respect to the target contour line $O_G$ at a point other than the predetermined point R. Hereinafter, a circle passing through the rolling contact point R around the first axis $A_1$ in the plane perpendicular to the first axis $A_1$ is referred to as a "rolling circle $C_F$". The rolling circle $C_F$ may be referred to as a "reference circle" in machining using a single cutter or a whirling cutter. The rolling circle $C_F$ is an example of a first circle of the disclosure.

In a manufacturing method using a disk-shaped tool 20 such as a single cutter in which the cutting edge 201 is provided on the outer peripheral portion, the axis inclination angle $\theta$ is defined based on a diameter $D_F$ of the rolling circle $C_F$. Therefore, in the embodiment, the axis inclination angle $\theta$ is also defined based on the diameter $D_F$ of the rolling circle $C_F$. Specifically, the axis inclination angle $\theta$ is defined by a number of teeth N of the spiral tooth 302 formed on the workpiece W, an interval P in the direction parallel to the first axis $A_1$ of the spiral tooth groove 301 (or the tooth 302 (that is, the spiral protrusion)) formed on the workpiece W, and a circumferential length $L_1$ of the rolling circle $C_F$. More specifically, the axis inclination angle $\theta$ is defined by the following Expression (3).

$$\theta = \tan^{-1}((N \times P)/L_1) \qquad \text{Expression (3)}$$

N: the number of tooth grooves 301 formed in the workpiece W (= the number of teeth of the manufactured gear 30)
P: the interval between the tooth grooves 301 formed in the workpiece W in the direction parallel to the first axis $A_1$
$L_1$: diameter $D_F$ of rolling circle $C_F$ × circumference ratio $\pi$ (= circumferential length of rolling circle $C_F$)

As is clear from Expression (3), the axis inclination angle $\theta$ decreases as the diameter $D_F$ of the rolling circle $C_F$ increases. In the whirling machining in the related art or machining using the single cutter in the related art, the diameter $D_F$ of the rolling circle $C_F$ is defined to be smaller than a diameter $D_T$ of the tooth tip circle $C_T$. More specifically, in the related art, the diameter $D_F$ of the rolling circle $C_F$ is defined such that the rolling circle $C_F$ passes through the vicinity of a tooth height center. In contrast, in the embodiment, the diameter $D_F$ of the rolling circle $C_F$ is 1.0 times or more the diameter $D_T$ of the tooth tip circle $C_T$. Accordingly, the axis inclination angle $\theta$ can be reduced as compared with the configuration in the related art in which the diameter $D_F$ of the rolling circle $C_F$ is less than 1.0 times the diameter $D_T$ of the tooth tip circle $C_T$.

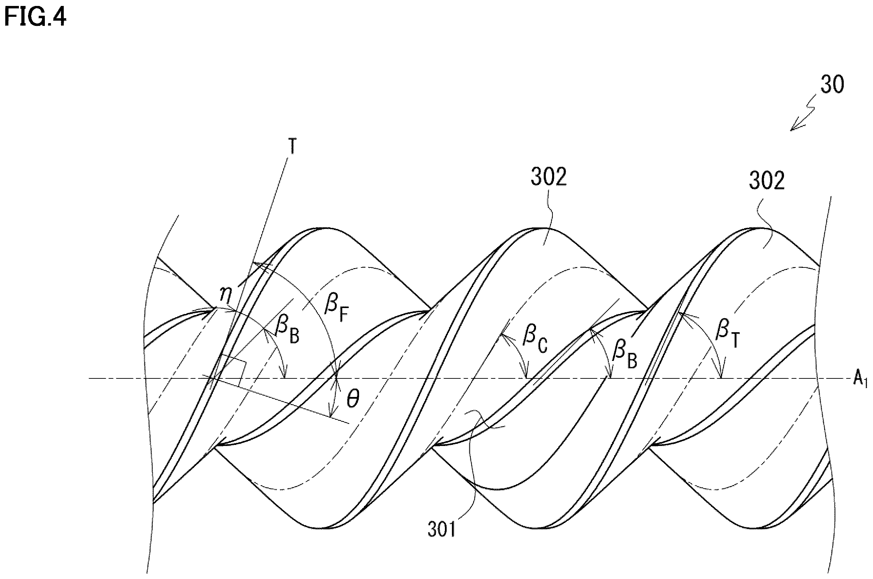

Fig. 4 is a side view showing an example of the manufactured gear 30, and is a view schematically showing a twist angle of the gear 30. The twist angle is an angle of a difference between the axial direction (the direction parallel to the first axis $A_1$) of the gear 30 and an extending direction of the tooth groove 301 or the tooth 302. In Fig. 4, $\beta_B$ indicates a twist angle at a tooth bottom portion, $\beta_C$ indicates a twist angle at a tooth height center portion, $\beta_T$ indicates a twist angle at a tooth tip portion, and $\beta_F$ indicates a twist angle at a position of the rolling circle $C_F$. As is clear from Fig. 4, the twist angle in each portion of the gear 30 decreases from the tooth bottom portion toward the tooth tip portion. The twist angle $\beta_F$ in the rolling circle $C_F$ of the manufactured gear 30 satisfies:

$$\text{(twist angle } \beta_F(°)) + \text{(axis inclination angle } \theta(°)) = 90(°)$$

Therefore, when the diameter $D_F$ of the rolling circle $C_F$ is increased, a value of the twist angle $\beta_F$ at the position of the rolling circle $C_F$ increases, and thus a value of the axis inclination angle $\theta$ decreases.

By reducing the axis inclination angle $\theta$, the distance $M_1$ shown in Fig. 2B can be reduced. That is, when the workpiece W and the tool 20 are relatively moved in the direction parallel to the first axis $A_1$, interference between the chuck 11 and the tool 20 can be reduced. Therefore, a length of a portion where the tooth groove 301 cannot be formed in the workpiece W can be shortened. By reducing the axis inclination angle $\theta$, it is possible to shorten the incomplete machined portion (a target shape, in other words, a portion that is not a design shape) in which the shape of the tooth 302 (tooth groove 301) of the gear 30 to be formed is incomplete.

In particular, since a lead angle of the helical gear (= 90(°) - (twist angle (°) of gear 30)) is larger than a lead angle of a general fastening screw, the axis inclination angle $\theta$ needs to be larger than that in the case of manufacturing a fastening screw. According to the embodiment, the axis inclination angle $\theta$ can be reduced when the helical gear is manufactured.

On the other hand, when the diameter $D_F$ of the rolling circle $C_F$ increases, the gear accuracy of the gear 30 to be formed, particularly, the gear accuracy at the tooth bottom portion may decrease for the following reason. As an index indicating the gear accuracy, for example, a tooth profile error defined in JIS B1702: 1998 is applied. Specifically, a shape of a side surface of the cutting edge 201 of the tool 20 (in other words, a contour shape of a rake face 202 of the tool 20) is transferred to a shape of a surface of the tooth groove 301 (also referred to as a shape of a surface of the tooth 302). Therefore, when the extending direction of the tooth groove 301 and an extending direction of a trajectory of the cutting edge 201 of the tool 20 (that is, a straight line T perpendicular to the second axis $A_2$) are parallel to each other as viewed in a direction perpendicular to the projection plane (as viewed in a direction perpendicular to the paper surface in Fig. 4), the gear accuracy can be maximized. Conversely, as an angle of a difference between the extending direction of the tooth groove 301 and the extending direction of the trajectory of the cutting edge 201 of the tool 20 increases, the gear accuracy decreases. As described above, since the twist angle of the gear 30 is the smallest at the tooth bottom portion, an angle $\eta$ of a difference between the twist angle $\beta_F$ in the rolling circle $C_F$ (the angle formed by the straight line T perpendicular to the second axis and the first axis $A_1$ in the projection plane) and the twist angle $\beta_B$ at the tooth bottom portion is larger than an angle of a difference between the twist angle $\beta_F$ in the rolling circle $C_F$ and a twist angle of a portion other than the tooth bottom portion. Therefore, as a distance from the tooth bottom circle $C_B$ of the rolling circle $C_F$ increases, the gear accuracy at the tooth bottom portion tends to decrease as compared with the gear accuracy in other portions.

In the related art, in order to prevent such a problem, as described above, the diameter $D_F$ of the rolling circle $C_F$ is set such that the rolling circle $C_F$ passes through the tooth height center portion or the vicinity thereof. With such a configuration, when viewed in the direction perpendicular to the projection plane, the angle $\eta$ of the difference between the twist angle $\beta_F$ in the rolling circle $C_F$ and the twist angle $\beta_B$ at the tooth bottom portion can be reduced, and an angle of a difference between the twist angle $\beta_F$ in the rolling circle $C_F$ and the twist angle $\beta_T$ at the tooth tip portion can be reduced. Therefore, a contour of the cutting edge 201 (in other words, the shape of the cutting edge 201 as viewed in a direction perpendicular to the rake face 202 of the cutting edge 201) and a cross-sectional shape of the tooth groove 301 (a cross-sectional shape taken along a plane perpendicular to the extending direction of the tooth groove 301 at the tooth height center portion) are close to each other. Therefore, it is possible to prevent a decrease in the gear accuracy. However, in such a configuration in the related art, since the axis inclination angle $\theta$ cannot be reduced, the incomplete machined portion becomes longer.

In the embodiment, the diameter $D_F$ of the rolling circle $C_F$ is 1.5 times or less the diameter $D_T$ of the tooth tip circle $C_T$. With such a configuration, it is possible to prevent a decrease in the gear accuracy. In other words, the axis inclination angle $\theta$ can be reduced (the incomplete machined portion can be shortened) while preventing a decrease in the gear accuracy. In other words, it is possible to achieve both reduction of the incomplete machined portion and prevention of a decrease in the gear accuracy.

As shown in Fig. 4, the twist angle $\beta_F$ in the rolling circle $C_F$ is preferably equal to or larger than the twist angle $\beta_T$ at the tooth tip portion (also referred to be equal to or larger than the twist angle $\beta_B$ at the tooth bottom portion or the twist angle $\beta_C$ at the tooth height center portion), and is preferably equal to or smaller than a magnitude $+ 25°$ of the twist angle $\beta_C$ at the tooth height center portion in the projection plane. This relationship can also be expressed by the following Expressions (1) and (2).

$$\cdot \; 90(°) - (\text{axis inclination angle } \theta(°)) \geq (\text{twist angle } \beta_T(°) \text{ at tooth tip portion}) \qquad \text{Expressior}$$

$$(1)$$

$$\cdot \; 90(°) - (\text{axis inclination angle } \theta(°)) \leq (\text{twist angle } \beta_C(°) \text{ at tooth height center portion of tooth groove} \quad 301 \text{ to be formed}) + 25(°) \qquad \text{Expression (2)}$$

As described above, as the angle $\eta$ of the difference between the twist angle $\beta_F$ (= $90(°)$ - axis inclination angle $\theta$ (°)) in the rolling circle $C_F$ and the twist angle $\beta_B$ of the tooth groove 301 at the tooth bottom portion increases, the gear accuracy at the tooth bottom portion decreases more. In the embodiment, by defining the twist angle $\beta_F$ in the rolling circle $C_F$ as described above, it is possible to prevent a decrease in the gear accuracy in the tooth bottom portion. In this case, as a lower limit of the diameter $D_F$ of the rolling circle $C_F$, a larger value of "1.0 times the diameter $D_T$ of the tooth tip circle $C_T$" and "a diameter such that the twist angle $\beta_F$ in the rolling circle $C_F$ becomes the same angle as the twist angle $\beta_C$ at the tooth height center portion of the tooth groove 301" is applied. On the other hand, as an upper limit of the diameter $D_F$ of the rolling circle $C_F$, a smaller value of "1.5 times the diameter $D_T$ of the tooth tip circle $C_T$" and "a diameter such that the twist angle $\beta_F$ in the rolling circle $C_F$ becomes the same angle as the twist angle $\beta_C + 25°$ at the tooth height center portion" is applied.

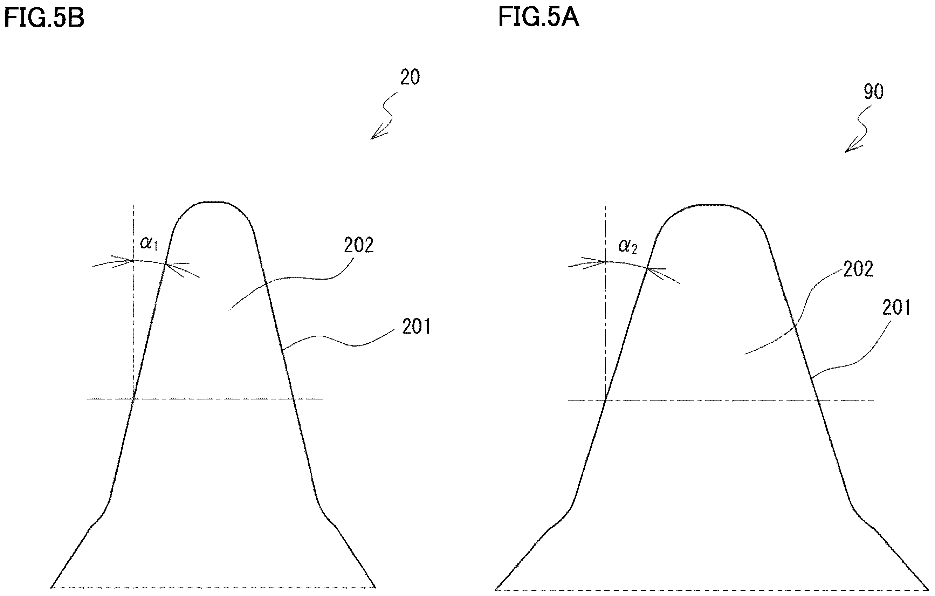

In the embodiment, a cross-sectional shape of the cutting edge 201 of the tool 20 is formed into the following shape, thereby preventing a decrease in the gear accuracy. Fig. 5A is a schematic view showing the shape of the cutting edge 201 of a tool 90 in the related art. Fig. 5B is a schematic view showing the shape of the cutting edge 201 of the tool 20 according to the embodiment. Figs. 5A and 5B are both cross-sectional views of the cutting edge 201 taken along a plane including the second axis $A_2$ in a state where the tools 20 and 90 are attached to the tool holder 14. As shown in Figs. 5A and 5B, the cross-sectional shape of the cutting edge 201 cut along the plane including the second axis $A_2$ has a tapered shape in which a width (a dimension in the direction parallel to the second axis $A_2$) decreases toward the outer peripheral side (away from the second axis $A_2$) in both the tool 90 in the related art and the tool 20 according to the embodiment.

When helical gears having the same specifications are manufactured, the width of the cutting edge 201 of the tool 20 according to the embodiment (more specifically, the width of the cutting edge 201 at a position at the same distance from the second axis $A_2$ in the plane including the second axis $A_2$) is smaller than the width of the cutting edge 201 of the tool 90 in the related art. Further, when manufacturing helical gears having the same specifications, a tool pressure angle $\alpha_1$ of the tool 20 according to the embodiment is smaller than a tool pressure angle $\alpha_2$ of the tool 90 in the related art when comparing the tool pressure angles of the tool 20 according to the embodiment and the tool 90 in the related art (more specifically, the tool pressure angles at positions at the same distance from the second axis $A_2$). The tool pressure angles $\alpha_1$ and $\alpha_2$ are angles formed by a straight line Q and a tangent line of the contour line of the cutting edge 201 at an intersection between the straight line Q perpendicular to the second axis $A_2$ and the contour line of the cutting edge 201 in the plane including the second axis $A_2$. The tool 90 in the related art refers to a tool when the diameter $D_F$ of the rolling circle $C_F$ is less than 1.0 times the diameter $D_T$ of the tooth tip circle $C_T$ (for example, substantially the same as a diameter $D_C$ of the tooth height center circle $C_C$). A lower limit and an upper limit of the tool pressure angle $\alpha_1$ are not particularly limited, but are actually regulated by the axis inclination angle $\theta$ and the shape and the dimension of the tooth 302 of the manufactured gear 30.

According to such a configuration, it is possible to prevent a decrease in the gear accuracy of the manufactured gear 30.

As the number of teeth of the gear 30 decreases, a rate of decrease in the axis inclination angle $\theta$ with respect to the increase in the diameter $D_F$ of the rolling circle $C_F$ increases. Therefore, as the number of teeth decreases, for example, when the number of teeth is any one of 1 to 4 as in the embodiment, the axis inclination angle $\theta$ is easily reduced.

As the number of teeth decreases and the module becomes smaller, a pitch circle diameter of the gear 30 becomes smaller. As the pitch circle diameter becomes smaller, the rate of decrease in the axis inclination angle $\theta$ with respect to the increase in the diameter $D_F$ of the rolling circle $C_F$ increases. Therefore, when the module is in a small range, for example, when the module is in a range of 0.3 or more and 2.0 or less as in the embodiment, the axis inclination angle $\theta$ is easily reduced.

According to the embodiment, it is possible to improve the gear accuracy (reduce the tooth profile error) at the tooth bottom portion as compared with the method of manufacturing the gear 30 by whirling machining. That is, in the whirling machining, since the workpiece W is cut on an inner peripheral side of the annular tool (whirling cutter), the workpiece W and the cutting edge 201 come into contact with each other with a certain length. Therefore, even when a "specific point (machining point)" is machined by the cutting edge 201 of the tool 20, machining is performed in a certain range before and after the specific point (machining point). Therefore, "undesired machining" is performed in the certain range before and after the specific point, and as a result, machining accuracy (gear accuracy) decreases. In contrast, according to the embodiment, since the workpiece W is cut by the cutting edge 201 provided on an outer periphery of the circular tool 20, a contact length between the cutting edge 201 and the workpiece W can be shortened. Therefore, since the range in which the "undesired machining" is performed can be reduced, the gear accuracy can be improved.


Summary of Embodiment

(1) A manufacturing method of a gear 30 according to the embodiment includes:

rotating a rod-shaped workpiece W around a first axis $A_1$;
rotating a tool 20 having a cutting edge 201 on an outer peripheral side around a second axis $A_2$ at a twisted position with respect to the first axis $A_1$; and
relatively moving the workpiece W and the tool 20 in a direction parallel to the first axis $A_1$ at a speed synchronized with a rotation speed of the workpiece W, at the same time, forming a spiral tooth groove 301 on an outer peripheral surface of the workpiece by bringing the cutting edge 201 of the tool 20 into contact with the outer peripheral surface of the workpiece W and removing a material of the workpiece W at a contact position by the relative movement between the tool 20 and the workpiece W, in which
in a plane perpendicular to the first axis $A_1$, the workpiece W is rotated around the first axis $A_1$ and the workpiece W and the tool 20 are relatively moved in the direction parallel to the first axis $A_1$ at the speed synchronized with the rotation speed of the workpiece W such that a contour line of the cutting edge 201 of the tool 20 is in rolling contact with a target contour line $O_G$, which is a contour line of the spiral tooth groove 301 to be formed, or an extension line of the target contour line $O_G$ at a predetermined point R of the target contour line $O_G$ or the extension line without slipping, and rotates while sliding with respect to the target contour line $O_G$ or the extension line at a point other than the predetermined point R, and
in the plane perpendicular to the first axis $A_1$, a diameter $D_F$ of a first circle (rolling circle $C_F$), which is a circle centered on the first axis $A_1$ and passing through the predetermined point R, is 1 time or more and 1.5 times or less a diameter $D_T$ of a second circle (tooth tip circle $C_T$) which is a tooth tip circle $C_T$ of the gear manufactured from the workpiece W centered on the first axis $A_1$.

According to the embodiment, an axis inclination angle $\theta$, which is an angle formed by the first axis $A_1$ and the

second axis $A_2$ projected onto a plane including the first axis $A_1$ and parallel to the second axis, can be reduced. Therefore, when the tool 20 is moved in the direction parallel to the first axis $A_1$, interference between a member (chuck 11) holding an end portion of the workpiece W and the tool 20 can be prevented, so that the tool 20 can be moved to the vicinity of the end portion of the workpiece W (the vicinity of the member holding the workpiece W). Therefore, an incomplete machined portion can be shortened.

(2) In the manufacturing method of the gear 30 according to the embodiment, a magnitude of the axis inclination angle θ, which is an angle formed by the first axis $A_1$ and the second axis $A_2$ projected onto the plane including the first axis $A_1$ and parallel to the second axis $A_2$, satisfies the following Expressions (1) and (2):

$$90(°) - (\text{axis inclination angle } θ(°)) ≥ (\text{twist angle } (°) \text{ at tooth tip portion of tooth groove 301}$$
to be formed)     Expression (1)

$$90(°) - (\text{axis inclination angle } θ(°)) ≤ (\text{twist angle } (°) \text{ at tooth height center portion of tooth}$$
groove 301 to be formed) + 25(°)   Expression (2).

According to such a configuration, the incomplete machined portion can be shortened, and a decrease in the accuracy of the manufactured gear 30 can be prevented. This configuration can also be said to be "the twist angle $β_F$ in the rolling circle $C_F$ is equal to or larger than the twist angle $β_T$ at the tooth tip portion (also referred to be equal to or larger than the twist angle $β_B$ at the tooth bottom portion or the twist angle $β_C$ at the tooth height center portion) and equal to or smaller than the magnitude + 25° of the twist angle $β_C$ at the tooth height center portion" in the plane (projection plane).

(3) In the manufacturing method of the gear 30 according to the embodiment, the number of teeth of the manufactured gear 30 is any one of 1 to 4.

As the number of teeth of the manufactured gear 30 decreases, a rate of decrease in the axis inclination angle θ with respect to the increase in the diameter $D_F$ of the first circle (rolling circle $C_F$) increases. Therefore, as the number of teeth decreases, specifically, when the number of teeth is any one of 1 to 4 as in the embodiment, an effect of reducing the axis inclination angle θ is enhanced.

(4) In the manufacturing method of the gear 30, a module of the manufactured gear 30 is 0.3 or more and 2.0 or less.

A pitch circle diameter of the gear decreases as the module decreases. As the pitch circle diameter becomes smaller, the rate of decrease in the axis inclination angle θ with respect to the increase in the diameter $D_F$ of the rolling circle $C_F$ increases. Therefore, when the module is in a small range, specifically, when the module is in a range of 0.3 or more and 2.0 or less as in the embodiment, the effect of reducing the axis inclination angle θ is enhanced.

(5) In the manufacturing method of the gear 30 according to the embodiment, the tool 20 is a single cutter.

According to such a configuration, in the manufacturing method of the gear 30 using the single cutter, the incomplete machined portion can be shortened.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

For example, in the above embodiment, an example is shown in which a helical gear having two teeth and a twist angle of 45° is manufactured, but the number of teeth and the twist angle of the manufactured gear 30 are not limited to the above embodiment. The shape of the teeth 302 of the manufactured gear 30 is not limited.

In the embodiment, a configuration using a single cutter as the tool 20 is shown, but the tool 20 is not limited to the single cutter. For example, a hob cutter may be applied as the tool.

**Claims**

1. A manufacturing method of a gear (30) comprising:

   rotating a rod-shaped workpiece (W) around a first axis (A1);
   rotating a tool (20) having a cutting edge (201) on an outer peripheral side around a second axis (A2) at a twisted position with respect to the first axis; and

while relatively moving the workpiece and the tool in a direction parallel to the first axis at a speed synchronized with a rotation speed of the workpiece, forming a spiral tooth groove (301) on an outer peripheral surface of the workpiece by bringing the cutting edge of the tool into contact with the outer peripheral surface of the workpiece and removing a material of the workpiece at a contact position by the relative movement between the tool and the workpiece, wherein

in a plane perpendicular to the first axis, the workpiece is rotated around the first axis and the workpiece and the tool are relatively moved in the direction parallel to the first axis at the speed synchronized with the rotation speed of the workpiece such that a contour line ($O_E$) of the cutting edge of the tool is in rolling contact with a target contour line ($O_G$), which is a contour line of the spiral tooth groove to be formed, at a predetermined point (R) of the target contour line or an extension line of the target contour line without slipping, and rotates while sliding with respect to the target contour line or the extension line at a point other than the predetermined point, and

in the plane perpendicular to the first axis, a diameter ($D_F$) of a first circle, which is a circle centered on the first axis and passing through the predetermined point, is 1 time or more and 1.5 times or less a diameter ($D_T$) of a second circle which is a tooth tip circle ($C_T$) of the gear manufactured from the workpiece centered on the first axis.

2. The manufacturing method of a gear according to claim 1, wherein
a magnitude of an axis inclination angle ($\theta$), which is an angle formed by the first axis and the second axis projected onto a plane including the first axis and parallel to the second axis, satisfies the following Expressions (1) and (2):

$$\cdot\ 90(°) - (\text{axis inclination angle } (°)) \geq (\text{twist angle } (\beta_T)\ (°) \text{ at tooth tip portion}) \qquad \text{Expression (1)}$$

$$\cdot\ 90(°) - (\text{axis inclination angle } (°)) \leq (\text{twist angle } (\beta_C)\ (°) \text{ at tooth height center portion}) + 25(°) \qquad \text{Expression (2).}$$

3. The manufacturing method of a gear according to claim 2, wherein the number of teeth of the manufactured gear is any one of 1 to 4.

4. The manufacturing method of a gear according to claim 3, wherein a module of the manufactured gear is 0.3 or more and 2.0 or less.

# FIG.1A

# FIG.1B

FIG.2A

FIG.2B

EP 4 699 726 A1

FIG.3

FIG.4

EP 4 699 726 A1

FIG.5B

FIG.5A

$\alpha_1$

202

201

20

$\alpha_2$

202

201

90

Europäisches
Patentamt

European
Patent Office

Office européen
des brevets

# EUROPEAN SEARCH REPORT

**Application Number**

EP 25 19 7590

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/294160 A1 (NAGATA EIRI [JP] ET AL) 21 September 2023 (2023-09-21) * paragraphs [0019] - [0037]; figures 1-5 * | 1-4 | INV. B23F13/02 B23C3/32 |
| | ----- | | |
| Y | US 6 306 017 B1 (FUCHS ERWIN [AT]) 23 October 2001 (2001-10-23) * column 2, line 35 - column 3, line 15; figures 1-4 * | 1-4 | |
| | ----- | | |
| A | US 2016/250701 A1 (GEISER HANSJOERG [DE]) 1 September 2016 (2016-09-01) * paragraphs [0039] - [0046]; figures 3-6 * | 1 | |
| | ----- | | |
| A | DE 512 669 C (GOULD & EBERHARDT) 15 November 1930 (1930-11-15) * the whole document * | 1 | |
| | ----- | | |

**TECHNICAL FIELDS SEARCHED (IPC)**

B23C
B23F
B23G

The present search report has been drawn up for all claims

| Place of search | Date of completion of the search | Examiner |
|---|---|---|
| The Hague | 23 December 2025 | Lorence, Xavier |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
..........................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 19 7590

This annex lists the patent family members relating to the patent documents cited in the above-mentioned European search report.
The members are as contained in the European Patent Office EDP file on
The European Patent Office is in no way liable for these particulars which are merely given for the purpose of information.

23-12-2025

| Patent document cited in search report | | Publication date | Patent family member(s) | | Publication date |
|---|---|---|---|---|---|
| US 2023294160 | A1 | 21-09-2023 | NONE | | |
| US 6306017 | B1 | 23-10-2001 | AT | 407353 B | 26-02-2001 |
| | | | EP | 1005939 A2 | 07-06-2000 |
| | | | US | 6306017 B1 | 23-10-2001 |
| US 2016250701 | A1 | 01-09-2016 | CN | 105921825 A | 07-09-2016 |
| | | | DE 102015002362 A1 | | 01-09-2016 |
| | | | EP | 3061554 A1 | 31-08-2016 |
| | | | US | 2016250701 A1 | 01-09-2016 |
| DE 512669 | C | 15-11-1930 | NONE | | |

EPO FORM P0459

For more details about this annex : see Official Journal of the European Patent Office, No. 12/82

**EP 4 699 726 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011078365 A